# EUROPEAN PATENT SPECIFICATION

(11) **EP 2 207 658 B1**
(45) Date of publication and mention of the grant of the patent: **27.01.2016**
(21) Application number: 07858881.1
(22) Date of filing: 15.11.2007
(51) Int. Cl.: B29C 35/02, B29D 30/00, B29D 30/48

(54) **PROCESS AND APPARATUS FOR THE PRODUCTION OF TYRES**
VERFAHREN UND VORRICHTUNG ZUR HERSTELLUNG VON FAHRZEUGREIFEN
PROCEDE ET APPAREIL POUR LA PRODUCTION DE PNEUMATIQUES

(43) Date of publication of application: 21.07.2010
(73) Proprietor: Pirelli Tyre S.p.A., 20126 Milano (IT)
(72) Inventor: PIANTANIDA, Piergiuseppe, I-20126 Milano (IT); BRUGNATTI, Andrea, I-20126 Milano (IT)
(74) Representative: Montevecchi, Emma
(86) International application number: PCT/IB2007/003497
(87) International publication number: WO 2009/063263

(56) References cited:
- EP-A- 0 604 984
- WO-A-2005/053942
- JP-A- 2001 260 136
- US-I5- B 287 275

## Description

The present invention relates to a process for the production of tyres and to a moulding and vulcanising station for the production of tyres.

In the production cycle of a tyre, provision is made, following a process of building in which the various components of the tyre itself are produced and/or assembled, for a final moulding and vulcanising process to be carried out to define the structure of the tyre according to a desired geometry, normally having a particular tread pattern.

To this end, the tyre is closed in a moulding cavity defined within a vulcanising mould and configured according to the geometric configuration of the outer surfaces of the tyre to be obtained.

A tyre generally comprises a carcass structure, configured toroidally in a ring, including one or more carcass plies, reinforced with reinforcing cords lying in radial planes, i.e., containing the axis of rotation of the tyre. Each carcass ply has its ends solidly associated with at least one metallic annular anchoring structure, customarily known as a bead core, constituting the reinforcement of the beads, i.e. of the radially inner ends of said tyre, having the function of permitting the assembly of the tyre with a corresponding mounting rim. In the crown of said carcass structure a band of elastomeric material known as the tread band is placed, within which, at the end of the vulcanising and moulding steps, a relief pattern is provided for contact with the ground.

Between the carcass structure and the tread band a reinforcing structure is located, customarily known as a belt structure. The belt structure customarily comprises, in the case of car tyres, at least two radially superposed strips of rubberised fabric provided with reinforcing cords, as a rule metallic, arranged parallel to one another in each strip and crossed with the cords of the adjacent strip, preferably arranged symmetrically with respect to the equatorial plane of the tyre. Preferably, said belt structure further comprises, in a radially outer position, at least on the ends of the underlying strips, also a third layer of textile or metallic cords, arranged circumferentially (at 0 degrees).

On the lateral surfaces of the carcass structure, each extending from one of the lateral edges of the tread band as far as the respective annular structure for anchoring to the beads, respective sidewalls made of elastomeric material are further fitted.

It is pointed out that in the present description and in the following claims, each pressure value should be understood as being a relative pressure value with respect to atmospheric pressure.

In EP 0604984, a method of vulcanizing a pneumatic tire, which involves vulcanizing a green tire for production of the pneumatic tire, the method characterized in that: only a bead region of the green tire is precured in a precuring process; and, the green tire is cured in a curing process after the precuring is completed, is disclosed.

US B 287275 describes a machine for building pneumatic tires including an expansible type drum having two shoulder to support the carcass zone on the bead cores, an expansible helical spring associated with each shoulder to oppose the axial components of thrusts directed towards the interior of the carcass generated by the shaping of the carcass and two bells which face each other and have an inner profile narrower than the freely shaped carcass. The bells expend radially for a portion of the height of the section of the completely shaped carcass and about the carcass sides during the shaping thereof. The bells may be provided with a projection one portion of which is an annular band having a outer diameter substantially equal to the outer diameter of the carcass at the end of its free shaping and a width such as to leave on the shaped carcass an axial gap astride the middle plane of the drum whose width is less than the width of the tread and the breaker. As an alternative embodiment to projections on the bell there may be opposing flanges supporting annular bands in which the flanges are moveably positioned axially outside the bells. The expansible helical spring is expanded radially by bringing together two conical surfaces and corresponding contacted by separating the two conical surfaces.

In WO 2005053942, the invention relates to a process for manufacturing a tyre comprising the steps of producing and assembling the tyre structural elements on a toroidal support to form a green tyre, and the step of precuring at least an inner surface of the green tyre by heating the toroidal support. The radially inner surface of the toroidal support is provided with a plurality of protruding elements so as to reduce the time required for the outer surface of the toroidal support to reach a temperature which is suitable for ensuring a uniform and homogeneous precuring of the inner surface of the green tyre, preferably of the inner surface and the bead regions of the green tyre.

JP 2001260136 solves the following problem: to surely finish vulcanization molding in a short time by keeping a green tire while preheating the inner side of the green tire having a very thick portion such as a tread 4a. The solution is given by an apparatus for preheating a green tire is provided with a stage 82 which attachably and releasably supports the green tire 4 in a predetermined posture and a preheating coil 83 which ignites a high frequency magnetic field to the green tire 4 supported on the stage 82. The preheating coil 83 induction-heats a belt member 56 and bead wires 52 each embedded in a tire, that is, in a tread portion 4a and bead portions 4c and 4c' respectively."

In United States Patent US 4 525 320 in the name of Kazumasa Sarumaru, a method of preheating and preforming a green tyre before the vulcanisation of the tyre is described. The method includes the steps of supporting the beads of a green tyre by means of relatively cold plates to form a sealed closed space, moving the plates one against the other until the tyre assumes a shape substantially equal to the final shape, supplying in the closed space a heat exchange fluid, and heating the fluid and the tyre to a temperature below the temperature at which vulcanisation commences, but high enough to preform the tyre. A coolant is fed inside the plates which engage the beads in order to avoid overheating thereof.

European Patent Application EP 1 177 872 in the name of Kobe Steel Ltd. relates to an apparatus for heating a green tyre by generating heat by means of magnetic induction to a metal element enclosed within the tyre, in order to complete the heating of the green tyre in a sufficiently short time. In particular, in the very thick areas of the green tyre in which it is difficult to raise the temperature, the efficiency of the generation of heat due to electromagnetic induction is accentuated by effectively concentrating the magnetic field at high frequency on the metal element enclosed within it. Among the preferred examples described, with particular reference to Figures 15a and 15b of the patent application cited, an apparatus for the heating of a green tyre is included in which a step of pressurisation of the tyre itself by means of admission into the tyre of a pressurising fluid is carried out in such a way that the green tyre expands to a desired shape and no deformation is produced.

In International Patent Application WO 02/066238 in the name of Bridgestone/Firestone North America Tire LLC, an apparatus for supporting tyres is described, including a frame, a rod which extends horizontally from the frame and an inflatable chamber mounted on the rod. The chamber is inflatable to an expanded configuration such as to come into contact with a substantial portion of the inner circumference of a green tyre in order to support same during a waiting cycle before vulcanisation.

The Applicant has observed that, in a tyre production process, the different temperature at which the green tyres being conveyed towards the vulcaniser may be, causes a slowing down of the production cycle, in particular during the vulcanisation step, since the transitory period for bringing each tyre to the vulcanisation temperature may be different for each tyre. This entails an increase in the processing times, inasmuch as it is necessary to wait until the relatively "coldest" green tyre also reaches a predetermined temperature, thus decreasing productivity.

In addition, the Applicant has noted that any deformations of the green tyre, such as ovalisation of the tyre, which may occur during transport and/or the waiting period for the green tyre from the building step to the moulding and vulcanising step, entail the presence of defects in the finished (vulcanised) tyre, such as, for example, the slipping out of one or more plies of the carcass or the presence of unwanted excesses and/or lack of volume. In particular, when producing high performance tyres for top of the range cars, the design requirements are such that these deformations may involve the rejection of the tyre.

The Applicant has also established that any slipping out of the plies, and therefore the formation of imperfections in the finished tyre, occurs predominantly in the region of the beads, each indicated hereinafter more generally by the term "annular anchoring structure".

More precisely, the Applicant has observed that when the green tyre is brought into the vulcaniser, it is inserted into a vulcanising mould comprising a rigid support, an upper sidewall plate and a lower sidewall plate, movable relative to each other and which, when in the closure position, enclose the green tyre in a moulding cavity. Each sidewall plate comprises a supporting or locating surface for a corresponding axially outer surface of the annular anchoring structure of the green tyre.

Generally, the axially outer surfaces of the annular anchoring structures of the green tyre are not however complementary to the supporting surfaces, as a rule axially inner surfaces, of the sidewall plates so that, at the moment when the green tyre is loaded into the mould, imperfect supporting on the sidewall plates may possibly occur, which may result in ovalisation and unevenness with respect to the design conditions, during the following step of moulding and vulcanisation.

The Applicant has established that the process of preheating and pressurisation as described in EP 1 177 872 might not preclude deformation in the moulded and vulcanised tyres, in particular at the level of the annular anchoring structures.

The Applicant therefore felt that it was necessary to perfect a process for the production of tyres in which suitable pre-moulding of at least a portion of the region of the annular anchoring structure of the green tyre was carried out, at the same time supplying heat to the tyre itself.

The Applicant finally found that, by suitably deforming a portion of the axially outer surface of the annular anchoring structure (in particular that portion of surface which, when the green tyre is inserted into the vulcanising mould, is in contact with a corresponding portion of surface of the sidewall plates of the mould), in such a way that this portion assumes a configuration substantially complementary to that of the surface of the sidewall plates of the vulcanising mould with which it will come into contact, the green tyre may be received within the mould with sufficient precision, when bearing on the sidewall plates, as to minimise the defects (lack of volume, excess volume, and slipping out of ply/plies) due to imperfect centring in the mould. This deformation may be brought about by means of a pressure acting on a portion of axially inner surface of at least one annular anchoring structure, substantially opposed to the surface of interest in contact against a suitable locating surface. Moreover, heat is supplied to the green tyre.

More precisely, according to a first aspect the invention relates to a process for the production of tyres according to claim 1.

By applying this solution, the Applicant has verified that the green tyres are substantially at the same temperature when they are inserted into the vulcanising moulds, and the configuration of the annular anchoring structures obtained by means of pre-moulding is such that their insertion into the vulcanising mould is precise and easy, since the surfaces which interfere with one another have a substantially complementary configuration.

The Applicant then noted that by configuring a portion of the axially outer surface of the annular anchoring structures so as to be substantially complementary to a portion of the supporting surface of the sidewall plate on which the green tyre abuts in the vulcanising mould, the insertion of the tyre into the mould is facilitated and the pressure exerted for the fitting of the tyre inside the mould does not involve any irregularity or unevenness owing to the new geometry of the bead region obtained by means of the localised pressure applied previously.

Preferably, the configuration of the portion of axially outer surface of the annular anchoring structures which is obtained by the substantial pre-moulding is substantially equal to its final configuration, or to the configuration assumed in the finished tyre. By means of this pre-moulding, a portion of axially outer surface of the region of the annular anchoring structures changes from a configuration having a substantially bulbous cross-section to a configuration having a cross-section including substantially rectilinear portions.

At the same time, the heat supplied heats the green tyre which is brought to a temperature which is substantially uniform and the same for all the green tyres awaiting the vulcanising cycle. A substantially constant temperature in all the green tyres reduces the duration of the cycle of vulcanisation of the tyre. Moreover, the heating of the green tyre at the same time facilitates the pre-moulding of the surface of the annular anchoring structures that is described above, since by means of the heat supplied, the material in which the annular anchoring structure is formed is rendered more ductile.

According to a second aspect, the invention relates to a moulding and vulcanising station for the production of tyres according to claim 12.

The present invention, in at least one of its aforesaid aspects, may have at least one of the following preferred features.

According to a preferred embodiment, said step of supplying heat to said green tyre comprises the step of rendering the temperature of said green tyre uniform.

According to another preferred embodiment, said step of supplying heat to said green tyre has a duration of between 5 and 60 minutes.

Even more preferably, said step of supplying heat to said green tyre has a duration of between 10 and 40 minutes.

According to a preferred embodiment, said step of pressing at least one portion of axially inner surface of at least said first annular anchoring structure comprises the steps of inflating at least one inflatable chamber in order to compress by means of a wall of said at least one inflatable chamber said at least one portion of said axially inner surface of said first annular anchoring structure.

According to a preferred embodiment, said step of supplying heat to said green tyre comprises the step of inflating said at least one inflatable chamber with a fluid at a temperature of between about 60°C and about 100°C. More preferably, said step of supplying heat to said green tyre comprises the step of inflating said at least one inflatable chamber with a fluid at a temperature of between about 70° and about 80°C.

According to a preferred embodiment, said step of pressing at least one portion of an axially inner surface of at least said first annular anchoring structure comprises the steps of:
- inserting said green tyre into a central body so as to abut said first annular anchoring structure against a locating structure including said first locating surface;
- inflating said at least one inflatable chamber so as to press said portion of an axially inner surface of said first annular anchoring structure;
- abutting said second annular anchoring structure of said green tyre opposed to said first locating surface against a second locating surface.

Even more preferably, said step of abutting said second annular anchoring structure against said second locating surface is followed by the steps of:
pressing a portion of an axially inner surface of said second annular anchoring structure so as to configure, by means of said second locating surface, a portion of axially outer surface of said second annular anchoring structure so as to be substantially complementary to a portion of supporting surface of the other of said lower and upper sidewall plates of said mould.

According to a particularly preferred embodiment, the portion of axially outer surface of said first annular anchoring structure is configured so as to be substantially complementary to the portion of supporting surface of the lower sidewall plate of said mould.

According to another particularly preferred embodiment, the portion of axially outer surface of said second annular anchoring structure is configured so as to be substantially complementary to the portion of supporting surface of the upper sidewall plate of said mould.

According to a preferred embodiment, said step of inflating at least one inflatable chamber comprises the steps of:
- inflating said at least one inflatable chamber to a first pressure so as to come into contact with said portion of axially inner surface of said first annular anchoring structure ;
- after having abutted the second annular anchoring structure against the second locating surface, further inflating said at least one inflatable chamber to a second pressure higher than said first pressure.

Preferably, said first pressure is between about 0.1 bar and about 0.3 bar. Preferably, said second pressure is between about 0.5 bar and about 2 bar.

According to a preferred embodiment, said step of pressing the portion of axially inner surface of said first annular anchoring structure comprises the step of inflating a first inflatable chamber in order to compress by means of a wall of said first inflatable chamber said portion of the axially inner surface of the first annular anchoring structure; and said step of pressing the portion of axially inner surface of the second annular anchoring structure comprises the step of inflating a second inflatable chamber in order to compress by means of a wall of said second inflatable chamber said portion of the axially inner surface of the second annular anchoring structure.

According to another preferred embodiment, between said building step and said moulding and vulcanising step, there is further provided the step of transferring the green tyre from an building plant to a moulding and vulcanising station by means of a robotic gripper.

According to one embodiment, said device for pressing said portion of axially inner surface of at least one of said first and second annular anchoring structures against said locating surface comprises at least one inflatable chamber.

According to another embodiment, at least one pipe is provided for admitting a fluid at a temperature of between about 60°C and about 100° into said at least one inflatable chamber.

Preferably, at least one pipe is provided for admitting a fluid at a temperature of between about 70°C and about 80°C into said at least one inflatable chamber.

Preferably, at least one pipe is provided for admitting a fluid at a relative pressure of between about 0.1 and about 2 bar into said inflatable chamber.

According to a preferred embodiment, said fluid is air.

According to another preferred embodiment, said first locating surface is suitable for coming into contact with at least one portion of an axially outer surface of the first annular anchoring structure, said support structure being operatively associated with a second locating surface, said second locating surface being suitable for coming into contact with at least one portion of an axially outer surface of the second annular anchoring structure.

According to a further preferred embodiment, a first inflatable chamber is provided for configuring the portion of said axially outer surface of the first annular anchoring structure against the first locating surface and a second inflatable chamber for configuring the portion of said axially outer surface of the second annular anchoring structure against said second locating surface.

According to a different embodiment, the first locating surface has a configuration substantially analogous to a portion of supporting surface for the green tyre of said lower sidewall plate, the second locating surface having a configuration substantially analogous to a portion of supporting surface for the green tyre of said upper sidewall plate.

According to a preferred embodiment, a closure member movable with respect to said support structure is provided.

Even more preferably, said closure member is fixed to said second locating surface.

According to another embodiment, a central body is provided which protrudes from a base of said support structure and onto which said green tyre is fitted.

Preferably, fixed onto said base is a first lower annular member centred on said central body comprising said first locating surface on which is configured the portion of axially outer surface of the first annular anchoring structure.

According to another preferred embodiment, said central body comprises said first and second inflatable chambers arranged in succession along the same central body.

According to a different embodiment, said closure member comprises a second movable upper annular member comprising said second locating surface on which is configured the portion of axially outer surface of the second annular anchoring structure.

Preferably, said central body is telescopically extensible.

Preferably, at least one of said locating surfaces is removable.

According to a preferred embodiment, an enclosure containing said support structure is provided.

Even more preferably, said enclosure is a thermostatically controlled chamber.

Other characteristics and advantages of the invention will become clearer from the detailed description of a preferred, but not exclusive, embodiment of a process for the production of tyres, of a moulding and vulcanising station and of an apparatus for the execution of the aforesaid process according to the present invention.

The description will be given hereinafter with reference to the appended drawings, provided solely by way of non-limiting example, and in which:
- Figure 1 is a diagrammatic sectional side view of an apparatus for the production of tyres operating according to the method of the present invention in a first operating position;
- Figure 2 is a diagrammatic sectional side view of the apparatus of Figure 1 in a second operating position;
- Figure 3 is a sectional view on an enlarged scale of a detail of the apparatus of Figures 1 and 2;
- Figure 4 is a sectional view of a vulcanising mould for tyres;
- Figures 5 and 6 are two partial sectional views of a detail of a green tyre before and after the execution of the method according to the invention;
- Figure 7 is a sectional side view of a second preferred exemplary embodiment of the apparatus operating according to the method of the invention;
- Figure 8 is a diagrammatic view of a tyre moulding and vulcanising station according to the invention.

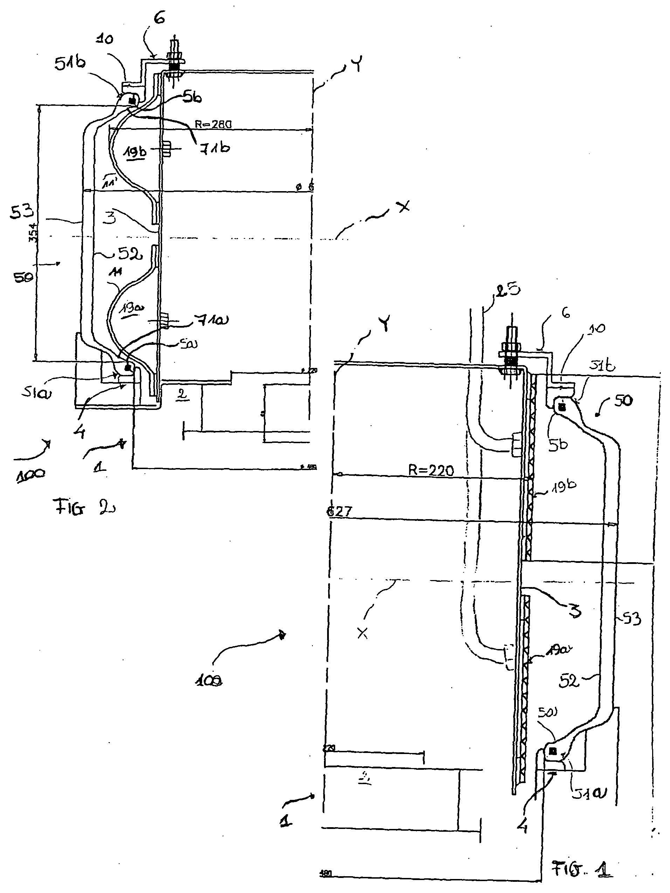

With initial reference to Figures 1 and 2, the reference 100 indicates an apparatus for the production of tyres, in particular for vehicle wheels, operating according to the method of the present invention.

The apparatus 100 is suitable for receiving green tyres 50 assembled in a previous manufacturing step, or in an building step, in a manner preferably known per se. In particular, the green tyre 50, shown only in section and diagrammatically in the appended Figures 1 and 2, defines an axis X perpendicular to its axis of rotation and comprises a carcass structure 52 including at least one carcass ply (not visible in the drawings) operatively associated with a pair of annular anchoring structures 51a, 51 b, a tread band 53 in a radially outer position to said carcass structure, and a belt structure (also not visible) interposed between the carcass structure and the tread band 53. Planes containing the axis of rotation of the tyre are indicated as radial planes.

Preferably, the green tyre 50 has dimensions of between 17 and 24 inches with a weight variable between 8 and 25 kg.

The tyre will hereinafter be described with reference to its axis X and to radial planes, therefore the references to "axially inner/outer" or "radially inner/outer" are to be understood with reference to axes and planes mentioned.

As can be seen diagrammatically in Figures 1 and 2, the annular anchoring structures 51a and 51b represent the two opposed radially inner ends of the green tyre 50.

The apparatus 100, in which a geometric axis Y is defined which preferably coincides, as in the view of Figures 1 and 2, with the axis of rotation of the green tyre 50 when this latter is inserted into the apparatus, comprises a support structure 1 including a base 2 from which protrudes a substantially cylindrical central body 3 also with axis Y.

Fixed on the base 2 is a lower annular member 4, centred on the cylindrical central body 3, on which the green tyre 50 abuts when introduced into the apparatus 100, as detailed hereinafter.

The apparatus 100 further comprises a closure member 6, movable with respect to the base 2 and operatively associated with the support structure 1, and suitable for being displaceable from an open position to allow the introduction of the green tyre 50 into the apparatus 100, to a closure position for it to be locked.

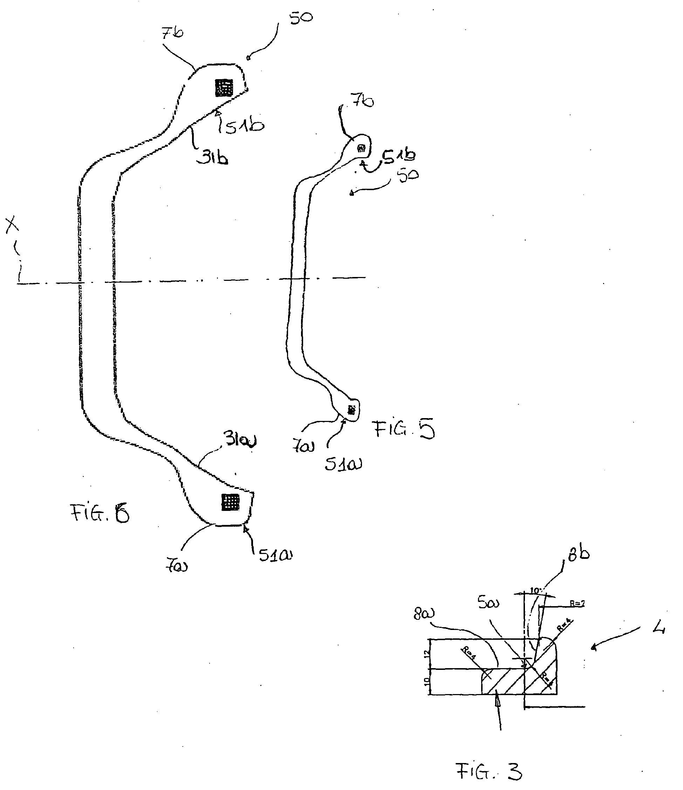

The lower annular member 4 is shown in greater detail in the section of Figure 3: it has a circular ring structure and has a cross-section composed of two branches, arranged in a substantially L-shape with one another, and by one of which it is fixed to the base 2. The member 4 defines a first locating surface 5a for a portion of axially outer surface (with reference to the axis X of the tyre) 7a of the annular anchoring structure 51a of the green tyre 50, placed in the lower position. The locating surface 5a comprises a first annular portion 8a substantially planar and parallel to the base 2 and a second portion 8b, also annular and substantially planar and angled with respect to the first by an angle with respect to the axis Y of preferably between about 5° and about 65°, and even more preferably between about 10° and about 45°.

The closure member 6 includes a second annular member fixed thereto, indicated hereinafter as upper annular member 10, having a configuration substantially identical to that of the lower annular member 4, and therefore defining a second locating surface 5b against which abuts a second axially outer surface 7b of the anchoring structure 51 b placed in an upper position when the green tyre 50 is inserted and enclosed in the apparatus 100. Figure 3 may therefore be regarded as also representing the upper annular member 10.

Preferably, the upper and lower annular structures 10, 4 are preferably removable so as to be optionally replaceable with annular members having a different diameter, such that the remaining members constituting the apparatus 100 are usable with tyres of different diameters.

In more detail, the configuration of the first and/or second locating surface 5a and 5b, at least for a portion thereof, is substantially analogous to the configuration of a portion of a supporting surface for the tyre provided preferably in an axially inner position on sidewall plates of a vulcanising mould 200, as illustrated more clearly hereinafter.

The green tyre 50, following its introduction and processing in the apparatus 100, is conducted inside a suitable vulcanising mould 200 so that the final shape is imparted to it.

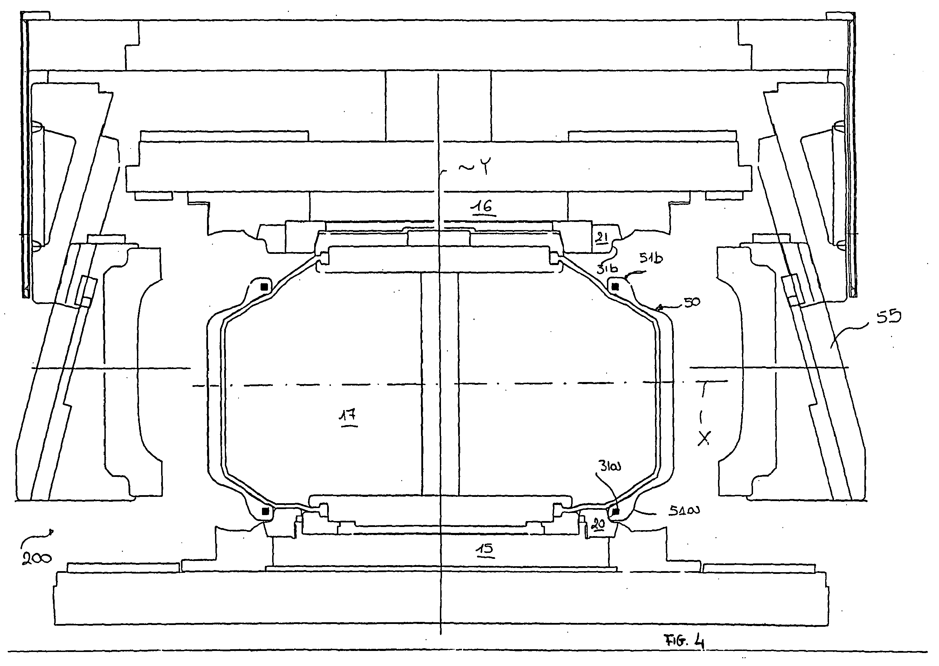

As can be seen diagrammatically in Figure 4, the vulcanising mould 200 for tyres, preferably known per se in the field of reference, has a lower sidewall plate 20 and an upper sidewall plate 21 respectively engaged at a base 15 and at a closure portion 16 of a container 17, or at other devices suitable for closing the green tyre 50 inside the mould itself. Although the mould 200 defines a geometric axis Y, in order to facilitate the reading of the present description using a single system of reference, the terms "axially inner/outer" and "radially inner/outer" associated with members of the mould 200 will be used making reference always to the axis X and radial planes of the green tyre 50 when slipped into the mould 200.

The base 15 and the closure portion 16, together with the respective lower sidewall plate 20 and upper sidewall plate 21, are mutually movable between an open state in which they are mutually spaced, as can be seen in Figure 4, to allow the introduction of the green tyre 50 to be vulcanised into the mould 200, and a closure position in which they are alongside one another to enclose the green tyre 50 in a moulding cavity (or the container 17) having walls which reproduce the geometric configuration to be imparted to the tyre itself at the end of the moulding and vulcanising process. The axis of rotation of the green tyre 50 and the axis Y of the mould 200 coincide in the example of Figure 4.

In detail, the sidewall plates 20, 21 are facing one another and arranged to operate against the opposed annular anchoring structures 51 a, 51b of the green tyre 50, in order to configure the axially outer surfaces thereof.

The mould 200 further comprises at least one ring of circumferential sectors 55 circumscribing the moulding cavity 17 and generally bearing moulding reliefs (not visible in Figure 4). The circumferential sectors 55 are arranged to operate on a radially outer surface of a so-called tread band of the green tyre 50, in order to create therein a series of recesses and grooves suitably arranged according to a desired "tread pattern".

Preferably, each of the sidewall plates 20, 21 has a peripheral, preferably axially inner, supporting surface 31a, 31b, on a portion of which abuts the respective portion of the first and/or second axially outer surface 7a, 7b of the annular anchoring surfaces 51 a, 51b. The configuration of the aforesaid peripheral surfaces 31a, 31b is substantially analogous to the configuration of the locating surfaces 5b, 5a provided in the upper and lower annular members 10, 4 of the apparatus 100 of the invention.

Returning to make reference to the exemplary embodiment of Figures 1 and 2, the cylindrical central body 3 further comprises a first and a second inflatable chamber 19a, 19b, arranged in series along the axis Y of the cylindrical body 3 one above the other and both surrounding the central body in a toroidal configuration.

A feed device, not visible in the drawings, for a fluid such as, for example, air, nitrogen or other substantially inert gases is operatively associated with said inflatable chambers 19a, 19b. Said device may comprise, as illustrated in Figure 1, a single pipe 25 for the delivery and discharge functions. Alternatively, said device may comprise a delivery pipe and a discharge pipe respectively for feeding in and discharging said fluid under pressure inside the chambers 19a, 19b, for inflating same.

The fluid admitted into the chambers 19a, 19b is preferably heated, or in the case of air, is admitted preferably at a temperature of between 60°C and 100°C, more preferably between 70° and 80°C.

As will be described in more detail hereinafter, in the expansion of the chambers, a portion of the outer wall 11, 11' of each of the inflatable chambers 19a, 19b, is suitable for pressing a respective portion of axially inner surface 71 a, 71b of each of the annular anchoring structures 51a, 51b of said green tyre 50 in such a way that the portion of axially outer surface 7a, 7b corresponding thereto configures itself suitably against the respective locating surfaces 5a, 5b.

In accordance with the method according to the invention, in a configuration with the closure member 6 arranged in the open state and with the inflatable chambers 19a, 19b in the deflated operating position, the green tyre 50 is arranged, for example by means of grippers by a robotic arm, on the base 2 of the apparatus 100 such that it is fitted into the central body 3 and that the axis of rotation of the green tyre 50 and axis Y of the apparatus 100 coincide. The lower anchoring structure 51 a of the green tyre, in this configuration visible in Figure 1, is abutted against the lower annular member 4. The central body 3 is preferably of telescopic type, such that it can be adjusted in height so as to adapt to green tyres 50 of different dimensions.

Preferably, with the green tyre 50 inserted, the chambers 19a, 19b are inflated by admitting hot air through the pipe 25 at a first pressure, below the final pre-moulding pressure, in order substantially to keep the green tyre 50 locked around the central body 3 and prevent unwanted movements thereof. Preferably, said first pressure is between 0.1 and 0.3 bar. The apparatus of the invention 100 is then closed by means of the closure member 6, such that the upper annular anchoring structure 51 b of the green tyre 50 abuts against the second, movable upper annular member 10.

The chambers 19a, 19b are then inflated, still by means of the same heated fluid by means of which the first locking pressure was obtained, until the desired final pressure is reached: in this configuration a portion of the outer wall 11, 11' of each chamber 19a, 19b comes into contact with a portion of axially inner surface 71 a, 71 b of the respective lower and/or upper annular anchoring structure 51 a, 51 b, pushing same towards the outside. This configuration is that visible in Figure 2.

In this way, the portion of axially outer surface 7a, 7b of the respectively lower and upper annular anchoring structure 51a, 51b is pushed towards the corresponding lower and upper locating surface 4, 10, with a force such as to obtain a modification of configuration thereof with respect to the initial configuration, or to that exhibited on insertion of the green tyre 50. Preferably, said second final pressure is between about 0.5 bar and about 2 bar.

The chambers 19a, 19b are kept at this pre-moulding pressure for between 5 and 60 minutes, more preferably between 10 and 30 minutes.

Subsequently, the heat transmitted by the prolonged contact between the inflatable chambers (which are, as stated, inflated by means of air heated to a temperature higher than ambient temperature) increases the temperature of the entire green tyre 50, and not only locally, to the desired temperature. The temperature reached is preferably below the vulcanising temperature in order to avoid any possible subsequent problems of over-vulcanisation.

At the end of this time, starting from a substantially rounded configuration of the annular anchoring structures 51 a, 51 b visible in Figure 5, a more "linear" configuration of same is obtained, creating substantially flat surfaces, having a profile substantially complementary to the profile of the aforesaid supporting surfaces 31a, 31 b, as can be seen diagrammatically in Figure 6.

Once the time necessary for the operation of pre-moulding and heating of the green tyre 50 has elapsed, the chambers 19a, 19b are deflated and the apparatus 100 is opened. The green tyre 50 is thus withdrawn and brought to the vulcanising mould 200 previously described and visible in Figure 4, for the next processing step.

A fresh green tyre 50 is fitted into the apparatus 100 and the cycle exemplified above is repeated.

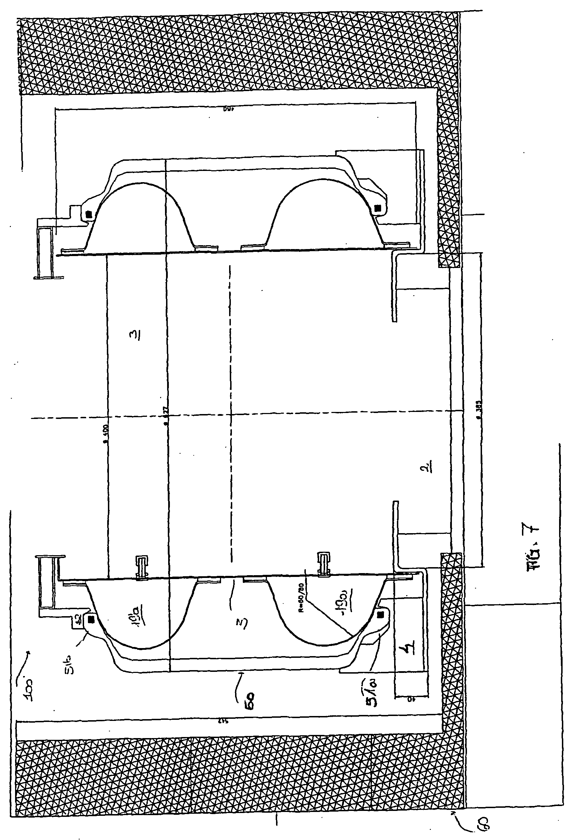

In a preferred alternative embodiment, shown in Figure 7, the apparatus 100' for the production of tyres, in which reference numbers analogous to those of the exemplary embodiment of Figures 1 and 2 represent the same components, comprises an enclosure 60 inside which the support structure 1 is arranged and in which the green tyre 50 is received. The enclosure 60, having the functions of a thermostatically controlled chamber, makes it easier to reach the most uniform possible temperature of the green tyre in a relatively short time.

Preferably, the enclosure 60 provides heating devices such as electrical resistances or pipes containing steam under pressure. With such types of heating, it is possible to avoid heating the fluids admitted into the chambers 19a, 19b.

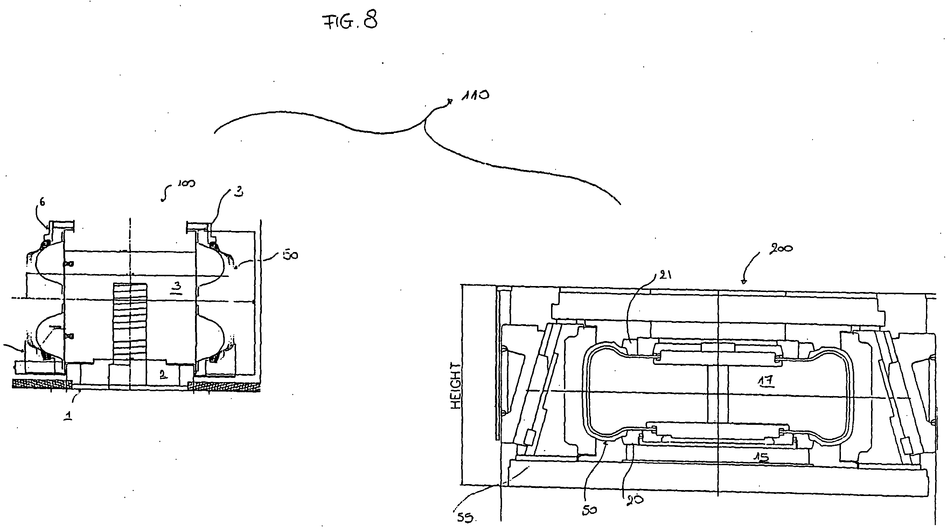

The vulcanising mould 200 and apparatus 100 or 100' are both elements of a tyre moulding and vulcanising station 110 according to the invention. The aforesaid station 110 as a whole is shown diagrammatically in Figure 8.

## Claims

1. A process for the production of tyres, comprising the steps of:
- building a green tyre (50) including a carcass structure (52) comprising at least one carcass ply operatively associated with a first annular anchoring structure (51a) and with a second annular anchoring structure (51 b), a tread band (53) in a radially outer position to said carcass structure, and a belt structure interposed between said carcass structure and said tread band;
- moulding and vulcanising said green tyre (50) within a vulcanising mould (200), said vulcanising mould including an upper sidewall plate (21) and a lower sidewall plate (20) and a ring of circumferential sectors (55) circumscribing a moulding cavity (17);
- wherein between said building step and said moulding and vulcanising step are further provided the steps of:
- pressing at least one portion of an axially inner surface (71 a) of at least said first annular anchoring structure (51a), so as to configure, by means of a first locating surface (5a), a portion of axially outer surface (7a) of at least said first annular anchoring structure (51a) so as to be substantially complementary to a portion of supporting surface (31 a, 31 b) for the green tyre (50) of at least one of said lower (20) and upper (21) sidewall plates of said mould (200);
- **characterized in** additionally including, between said building step and said moulding and vulcanising step, the step of supplying heat to said green tyre (50) keeping the temperature of said green tyre (50) below a vulcanising temperature.

2. The process according to claim 1, wherein said step of supplying heat to said green tyre (50) has a duration of between 5 and 60 minutes.

3. The process according to one or more of the preceding claims, wherein said step of pressing at least one portion of axially inner surface (71a) of at least said first annular anchoring structure (51a) comprises the steps of inflating at least one inflatable chamber (19a, 19b) in order to compress by means of a wall (11) of said at least one inflatable chamber (19a, 19b) said at least one portion of said axially inner surface (71a) of said first annular anchoring structure (51a).

4. The process according to claim 3, wherein said step of supplying heat to said green tyre (50) comprises the step of inflating said at least one inflatable chamber (19a, 19b) with a fluid at a temperature of between about 60°C and about 100°C.

5. The process according to one or more of the preceding claims, wherein said step of pressing at least one portion of an axially inner surface (71 a) of at least said first annular anchoring structure (51 a) comprises the steps of:
- inserting said green tyre (50) into a central body (3) so as to abut said first annular anchoring structure (51a) against a locating structure (4) including said first locating surface (5a);
- inflating said at least one inflatable chamber (19a; 19b) so as to press said portion of an axially inner surface (71a) of said first annular anchoring structure (51 a);
- abutting said second annular anchoring structure (51 b) of said green tyre (50) opposed to said first locating surface (5a) against a second locating surface (5b).

6. The process according to claim 5, wherein said step of abutting said second annular anchoring structure (51 b) against said second locating surface (5b) is followed by the steps of:
- pressing a portion of an axially inner surface (71b) of said second annular anchoring structure (51 b) so as to configure, by means of said second locating surface (5b), a portion of axially outer surface (7b) of said second annular anchoring structure (51 b) so as to be substantially complementary to a portion of supporting surface (31b) of the other of said lower (20) and upper (21) sidewall plates of said mould (200).

7. The process according to claim 1 or claim 6, wherein the portion of axially outer surface (7a) of said first annular anchoring structure (51a) is configured so as to be substantially complementary to the portion of supporting surface (31a) of the lower sidewall plate (20) of said mould (200).

8. The process according to claim 7, wherein the portion of axially outer surface (7b) of said second annular anchoring structure (51 b) is configured so as to be substantially complementary to the portion of supporting surface (31b) of the upper sidewall plate (21) of said mould (200).

9. The process according to claim 5 when dependent on claim 3, wherein said step of inflating at least one inflatable chamber (19a, 19b) comprises the steps of
- inflating said at least one inflatable chamber (19a, 19b) to a first pressure so as to come into contact with said portion of axially inner surface (71 a) of said first annular anchoring structure (51 a);
- after having abutted the second annular anchoring structure (51 b) against the second locating surface (5b), further inflating said at least one inflatable chamber (19a, 19b) to a second pressure higher than said first pressure.

10. The process according to claim 6, wherein said step of pressing the portion of axially inner surface (71 a) of said first annular anchoring structure (51 a) comprises the step of:
- inflating a first inflatable chamber (19a) in order to compress by means of a wall (11) of said first inflatable chamber (19a) said portion of the axially inner surface (71 a) of the first annular anchoring structure (51 a);
and said step of pressing the portion of axially inner surface (71b) of the second annular anchoring structure (51 b) comprises the step of:
- inflating a second inflatable chamber (19b) in order to compress by means of a wall (11') of said second inflatable chamber (19b) said portion of the axially inner surface (71 b) of the second annular anchoring structure (51 b).

11. The process according to any one of the preceding claims, wherein between said step of building and said step of moulding and vulcanising, the step is further provided of transferring the green tyre (50) from a building plant to a moulding and vulcanising station (110) by means of a robotic gripper.

12. A moulding and vulcanising station (110) for the production of tyres, each green tyre (50) comprising a carcass structure (52) having at least one carcass ply operatively associated with a first annular anchoring structure (51a) and with a second annular anchoring structure (51 b), a tread band (53) in a radially outer position to said carcass structure, and a belt structure interposed between said carcass structure and said tread band, said moulding and vulcanising station (110) comprising:
- at least one vulcanising mould (200), said mould (200) including an upper sidewall plate (21) and a lower sidewall plate (20) and a ring of circumferential sectors (55) circumscribing a moulding cavity (17);
- at least one apparatus (100) operatively associated with said at least one mould (200) comprising:
• at least one support structure (1) for supporting a green tyre (50);
• at least one first locating surface (5a, 5b) operatively associated with said support structure (1) suitable for coming into contact with at least one portion of an axially outer surface (7a, 7b) of at least one of said first (51 a) and second (51b) annular anchoring structures;
• at least one device for pressing a portion of an axially inner surface (71a, 71 b) of at least one of said first (51 a) and second (51 b) annular anchoring structures, said device being suitable for coming into contact with said portion of axially inner surface (71a, 71 b), such as to configure said portion of axially outer surface (7a, 7b) of at least one of said first (51a) and second (51 b) annular anchoring structures so as to be substantially complementary to said first locating surface (5a, 5b);
• at least one device for supplying heat to said green tyre (50) apt to keep the temperature of said green tyre (50) below a vulcanising temperature;
- wherein said at least one first locating surface (5a, 5b) has a configuration substantially analogous to a portion of supporting surface for the green tyre (50) of at least one of said lower sidewall plate (20) and upper sidewall plate (21).

13. The moulding and vulcanising station (110) according to claim 12, wherein said device for pressing said portion of axially inner surface (71 a, 71 b) of at least one of said first (51 a) and second (51 b) annular anchoring structures against said locating surface (5a, 5b) comprises at least one inflatable chamber (19a, 19b).

14. The moulding and vulcanising station (110) according to claim 13, including at least one pipe (25) for admitting a fluid at a relative pressure of between about 0.1 bar and about 2 bar into said inflatable chamber (19a, 19b).

15. The moulding and vulcanising station (110) according to claim 13, including at least one pipe (25) for admitting a fluid at a temperature of between about 60°C and about 100°C into said at least one inflatable chamber (19a, 19b).

16. The moulding and vulcanising station (110) according to one or more of claims 12 to 15, wherein said first locating surface (5a) is suitable for coming into contact with at least one portion of an axially outer surface (7a) of the first annular anchoring structure (51a), said support structure (1) being operatively associated with a second locating surface (5b), said second locating surface (5b) being suitable for coming into contact with at least one portion of an axially outer surface (7b) of the second annular anchoring structure (51b).

17. The moulding and vulcanising station (110) according to claim 16, comprising a first inflatable chamber (19a) for configuring the portion of said axially outer surface (7a) of the first annular anchoring structure (51a) against the first locating surface (5a), and a second inflatable chamber (19b) for configuring the portion of said axially outer surface (7b) of the second annular anchoring structure (51 b) against said second locating surface (5b).

18. The moulding and vulcanising station (110) according to one or more of claims 12 to 17, comprising a closure member (6) movable with respect to said support structure (1).

19. The moulding and vulcanising station (110) according to one or more of claims 12 to 18, including a central body (3) which protrudes from a base (2) of said support structure (1) and onto which said green tyre (50) is fitted.

20. The moulding and vulcanising station (110) according to claim 18, wherein said closure member (6) comprises a second movable upper annular member comprising said second locating surface (5b) on which is configured the portion of axially outer surface (7b) of the second annular anchoring structure (51 b).

21. The moulding and vulcanising station (110) according to claim 19, wherein said central body (3) is telescopically extensible.

22. The moulding and vulcanising station (110) according to one or more of claims 12 to 21, wherein at least one of said locating surfaces (5a; 5b) is removable.

23. The moulding and vulcanising station (110) according to one or more of claims 12 to 22, including an enclosure (60) containing said support structure (1).

24. The moulding and vulcanising station (110) according to claim 23, wherein said enclosure (60) is a thermostatically controlled chamber.

## Patentansprüche

1. Verfahren zur Herstellung von Reifen, das die folgenden Schritte umfasst:
- Fertigen eines Rohreifens (50) mit einer Karkassenstruktur (52), die zumindest eine Karkassenlage umfasst, die operativ einer ersten ringförmigen Verankerungsstruktur (51a) und einer zweiten ringförmigen Verankerungsstruktur (51b) zugeordnet ist, einem Laufflächenring (53) in einer radial äußeren Stellung in Bezug auf die Karkassenstruktur, und einer Gürtelstruktur, die zwischen der Karkassenstruktur und dem Laufflächenring angeordnet ist;
- Formen und Vulkanisieren des Rohreifens (50) innerhalb einer Vulkanisierform (200), wobei die Vulkanisierform eine obere Seitenplatte (21) und eine untere Seitenplatte (20) sowie einen Ring aus umlaufenden Sektoren (55) umfasst, die einen Formungshohlraum (17) umschreiben;
- wobei zwischen dem Schritt des Fertigens und dem Schritt des Formens und Vulkanisierens des Weiteren die folgenden Schritte vorgesehen sind:
- Pressen von zumindest einem Abschnitt einer axial inneren Oberfläche (71 a) zumindest der ersten ringförmigen Verankerungsstruktur (51a), um mittels einer ersten Positionieroberfläche (5a) einen Abschnitt der axial äußeren Oberfläche (7a) zumindest der ersten ringförmigen Verankerungsstruktur (51a) so auszubilden, dass er im Wesentlichen komplementär zu einem Abschnitt der Tragoberfläche (31a, 31b) für den Rohreifen (50) zumindest entweder der unteren (20) und/oder oberen (21) Seitenplatte der Form (200) ist;
- **dadurch gekennzeichnet, dass** es zwischen dem Schritt des Fertigens und dem Schritt des Formens und Vulkanisierens zusätzlich den Schritt der Zuführung von Wärme an den Rohreifen (50) umfasst, die die Temperatur des Rohreifens (50) unter einer Vulkanisiertemperatur hält.

2. Verfahren nach Anspruch 1, wobei der Schritt der Wärmezufuhr an den Rohreifen (50) eine Dauer von zwischen 5 und 60 Minuten aufweist.

3. Verfahren nach einem oder mehreren der vorhergehenden Ansprüche, wobei der Schritt des Pressens zumindest eines Abschnitts einer axial inneren Oberfläche (71a) zumindest der ersten ringförmigen Verankerungsstruktur (51a) die Schritte des Aufblasens zumindest einer aufblasbaren Kammer (19a, 19b) umfasst, um mittels einer Wand (11) der zumindest einen aufblasbaren Kammer (19a, 19b) den zumindest einen Abschnitt der axial inneren Oberfläche (71a) der ersten ringförmigen Verankerungsstruktur (51 a) zu komprimieren.

4. Verfahren nach Anspruch 3, wobei der Schritt der Wärmezufuhr an den Rohreifen (50) den Schritt des Aufblasens der zumindest einen aufblasbaren Kammer (19a, 19b) mit einem Fluid bei einer Temperatur von zwischen etwa 60 °C und etwa 100 °C umfasst.

5. Verfahren nach einem oder mehreren der vorhergehenden Ansprüche, wobei der Schritt des Pressens zumindest eines Abschnitts einer axial inneren Oberfläche (71a) zumindest der ersten ringförmigen Verankerungsstruktur (51a) die folgenden Schritte umfasst:
- Einsetzen des Rohreifens (50) in einen Zentralkörper (3), um so die erste ringförmige Verankerungsstruktur (51a) gegen eine Positionierstruktur (4) anzulegen, die die erste Positionieroberfläche (5a) umfasst;
- Aufblasen der zumindest einen aufblasbaren Kammer (19a; 19b), um so den Abschnitt eine axial inneren Oberfläche (71a) der ersten ringförmigen Verankerungsstruktur (51a) zu pressen;
- Anlegen der zweiten ringförmigen Verankerungsstruktur (51b) des Rohreifens (50) gegen eine zweite Positionieroberfläche (5b), der ersten Positionieroberfläche (5a) gegenüberliegend.

6. Verfahren nach Anspruch 5, wobei dem Schritt des Anlegens der zweiten ringförmigen Verankerungsstruktur (51b) gegen die zweite Positionieroberfläche (5b) die folgenden Schritte nachfolgen:
- Pressen von eines Abschnitts einer axial inneren Oberfläche (71b) der zweiten ringförmigen Verankerungsstruktur (51b), um mittels einer zweiten Positionieroberfläche (5b) einen Abschnitt der axial äußeren Oberfläche (7b) der zweiten ringförmigen Verankerungsstruktur (51b) so auszubilden, dass er im Wesentlichen komplementär zu einem Abschnitt der Tragoberfläche (31b) der anderen der unteren (20) und oberen (21) Seitenplatten der Form (200) ist.

7. Verfahren nach Anspruch 1 oder Anspruch 6, wobei der Abschnitt der axial äußeren Oberfläche (7a) der ersten ringförmigen Verankerungsstruktur (51a) so ausgebildet ist, dass er im Wesentlichen komplementär zu dem Abschnitt der Tragoberfläche (31 a) der unteren Seitenplatte (20) der Form (200) ist.

8. Verfahren nach Anspruch 7, wobei der Abschnitt der axial äußeren Oberfläche (7b) der zweiten ringförmigen Verankerungsstruktur (51b) so ausgebildet ist, dass er im Wesentlichen komplementär zu dem Abschnitt der Tragoberfläche (31b) der unteren Seitenplatte (21) der Form (200) ist.

9. Verfahren nach Anspruch 5, sofern abhängig von Anspruch 3, wobei der Schritt des Aufblasens zumindest einer aufblasbaren Kammer (19a, 19b) die folgenden Schritte umfasst:
- Aufblasen der zumindest einen aufblasbaren Kammer (19a, 19b) auf einen ersten Druck, um mit dem Abschnitt der axial inneren Oberfläche (71 a) der ersten ringförmigen Verankerungsstruktur (51a) in Kontakt zu gelangen;
- nach dem Anlegen der zweiten ringförmigen Verankerungsstruktur (51b) gegen die zweite Positionieroberfläche (5b), weiteres Aufblasen der zumindest einen aufblasbaren Kammer (19a, 19b) auf einen zweiten Druck, der höher ist als der erste Druck.

10. Verfahren nach Anspruch 6, wobei der Schritt des Pressens des Abschnitts der axial inneren Oberfläche (71a) der ersten ringförmigen Verankerungsstruktur (51a) den folgenden Schritt umfasst:
- Aufblasen einer ersten aufblasbaren Kammer (19a), um mittels einer Wand (11) der ersten aufblasbaren Kammer (19a) den Abschnitt der axial inneren Oberfläche (71 a) der ersten ringförmigen Verankerungsstruktur (51 a) zu komprimieren;
und der Schritt des Pressens des Abschnitts der axial inneren Oberfläche (71b) der zweiten ringförmigen Verankerungsstruktur (51b) den folgenden Schritt umfasst:
- Aufblasen einer zweiten aufblasbaren Kammer (19b), um mittels einer Wand (11') der zweiten aufblasbaren Kammer (19b) den Abschnitt der axial inneren Oberfläche (71b) der zweiten ringförmigen Verankerungsstruktur (51b) zu komprimieren.

11. Verfahren nach einem der vorhergehenden Ansprüche, wobei zwischen dem Schritt des Fertigens und dem Schritt des Formens und Vulkanisierens der weitere Schritt des Überführens des Rohreifens (50) von einer Fertigungsanlage zu einer Form- und Vulkanisierstation (110) mittels eines Robotergreifarms vorgesehen ist.

12. Form- und Vulkanisierstation (110) zur Herstellung von Reifen, wobei jeder Rohreifen (50) eine Karkassenstruktur (52) mit zumindest einer Karkassenlage umfasst, die operativ einer ersten ringförmigen Verankerungsstruktur (51a) und einer zweiten ringförmigen Verankerungsstruktur (51b) zugeordnet ist, einem Laufflächenring (53) in einer radial äußeren Stellung in Bezug auf die Karkassenstruktur, und einer Gürtelstruktur, die zwischen der Karkassenstruktur und dem Laufflächenring angeordnet ist, wobei die Form- und Vulkanisierstation (110) umfasst:
- zumindest eine Vulkanisierform (200), wobei die Vulkanisierform (200) eine obere Seitenplatte (21) und eine untere Seitenplatte (20) sowie einen Ring aus umlaufenden Sektoren (55) umfasst, die einen Formungshohlraum (17) umschreiben;
- zumindest eine Vorrichtung (100), die operativ der zumindest einen Form (200) zugeordnet ist und umfasst:
- zumindest eine Trägerstruktur (1) zum Tragen eines Rohreifens (50);
- zumindest eine erste Positionieroberfläche (5a, 5b), die operativ der Trägerstruktur (1) zugeordnet und dazu geeignet ist, mit zumindest einem Abschnitt einer axial äußeren Oberfläche (7a, 7b) zumindest einer der ersten (51a) und zweiten (51b) ringförmigen Verankerungsstrukturen in Kontakt zu gelangen;
- zumindest eine Vorrichtung zum Pressen eines Abschnitts einer axial inneren Oberfläche (71a, 71b) zumindest einer der ersten (51a) und zweiten (51b) ringförmigen Verankerungsstrukturen, wobei die Vorrichtung dazu geeignet ist, mit dem Abschnitt der axial inneren Oberfläche (71a, 71b) in Kontakt zu gelangen, um den Abschnitt der axialen äußeren Oberfläche (7a, 7b) zumindest einer der ersten (51a) und zweiten (51b) ringförmigen Verankerungsstrukturen so auszubilden, dass er im Wesentlichen komplementär zu der ersten Positionieroberfläche (5a, 5b) ist;
- zumindest eine Vorrichtung zur Zuführung von Wärme an den Rohreifen (50), die in der Lage ist, die Temperatur des Rohreifens (50) unter einer Vulkanisiertemperatur zu halten;
- wobei die zumindest eine erste Positionieroberfläche (5a, 5b) eine Konfiguration aufweist, die im Wesentlichen analog zu einem Abschnitt der Tragoberfläche für den Rohreifen (50) zumindest einer der unteren Seitenplatte (20) und oberen (21) Seitenplatten ist.

13. Form- und Vulkanisierstation (110) nach Anspruch 12, wobei die Vorrichtung zum Pressen des Abschnitts der axial inneren Oberfläche (71a, 71b) zumindest einer der ersten (51a) und zweiten (51b) ringförmigen Verankerungsstrukturen gegen die Positionieroberfläche (5a, 5b) zumindest eine aufblasbare Kammer (19a, 19b) umfasst.

14. Form- und Vulkanisierstation (110) nach Anspruch 13, umfassend zumindest ein Rohr (25) zum Einleiten eines Fluids mit einem relativen Druck zwischen etwa 0,1 bar und etwa 2 bar in die aufblasbare Kammer (19a, 19b).

15. Form- und Vulkanisierstation (110) nach Anspruch 13, umfassend zumindest ein Rohr (25) zum Einleiten eines Fluids mit einer relativen Temperatur zwischen etwa 60 °C und etwa 100 °C in die zumindest eine aufblasbare Kammer (19a, 19b).

16. Form- und Vulkanisierstation (110) nach einem oder mehreren der Ansprüche 12 bis 15, wobei die erste Positionieroberfläche (5a) dazu geeignet ist, mit zumindest einem Abschnitt einer axial äußeren Oberfläche (7a) der ersten ringförmigen Verankerungsstruktur (51a) in Kontakt zu gelangen, wobei die Trägerstruktur (1) operativ einer zweiten Positionieroberfläche (5b) zugeordnet ist, wobei die zweite Positionieroberfläche (5b) dazu geeignet ist, mit zumindest einem Abschnitt einer axial äußeren Oberfläche (7b) der zweiten ringförmigen Verankerungsstruktur (51b) in Kontakt zu gelangen.

17. Form- und Vulkanisierstation (110) nach Anspruch 16, umfassend eine erste aufblasbare Kammer (19a), um den Abschnitt der axial äußeren Oberfläche (7a) der ersten ringförmigen Verankerungsstruktur (51a) gegen die erste Positionieroberfläche (5a) zu konfigurieren, sowie eine zweite aufblasbare Kammer (19b), um den Abschnitt der axial äußeren Oberfläche (7b) der zweiten ringförmigen Verankerungsstruktur (51b) gegen die zweite Positionieroberfläche (5b) zu konfigurieren.

18. Form- und Vulkanisierstation (110) nach einem oder mehreren der Ansprüche 12 bis 17, umfassend ein Abschlusselement (6), das in Bezug auf die Trägerstruktur (1) beweglich ist.

19. Form- und Vulkanisierstation (110) nach einem oder mehreren der Ansprüche 12 bis 18, umfassend einen Zentralkörper (3), der von einer Basis (2) der Trägerstruktur (1) wegragt und auf den der Rohreifen (50) aufgesetzt wird.

20. Form- und Vulkanisierstation (110) nach Anspruch 18, wobei das Abschlusselement (6) ein zweites bewegliches, oberes ringförmiges Element umfasst, das die zweite Positionieroberfläche (5b) umfasst, an welcher der Abschnitt der axial äußeren Oberfläche (7b) der zweiten ringförmigen Verankerungsstruktur (51b) konfiguriert ist.

21. Form- und Vulkanisierstation (110) nach Anspruch 19, wobei der Zentralkörper (3) teleskopartig ausfahrbar ist.

22. Form- und Vulkanisierstation (110) nach einem oder mehreren der Ansprüche 12 bis 21, wobei zumindest eine der Positionieroberflächen (5a; 5b) abnehmbar ist.

23. Form- und Vulkanisierstation (110) nach einem oder mehreren der Ansprüche 12 bis 22, umfassend eine Einhausung (60), die die Trägerstruktur (1) enthält.

24. Form- und Vulkanisierstation (110) nach Anspruch 23, wobei die Einhausung (60) eine thermostatisch gesteuerte Kammer ist.

## Revendications

1. Processus de fabrication de pneus, comprenant les étapes consistant :
- à construire un pneu cru (50) comportant une structure de carcasse (52) comprenant au moins un pli de carcasse associé de manière fonctionnelle à une première structure d'ancrage annulaire (51a) et à une deuxième structure d'ancrage annulaire (51b), une bande de roulement (53) dans une position radialement extérieure par rapport à ladite structure de carcasse, et une structure de ceinture interposée entre ladite structure de carcasse et ladite bande de roulement ;
- à mouler et à vulcaniser ledit pneu cru (50) à l'intérieur d'un moule de vulcanisation (200), ledit moule de vulcanisation comportant une plaque de paroi latérale supérieure (21) et une plaque de paroi latérale inférieure (20) et un anneau de secteurs circonférentiels (55) entourant une cavité de moulage (17) ;
- dans lequel, entre ladite étape de construction et ladite étape de moulage et de vulcanisation sont en outre prévues les étapes consistant :
- à presser au moins une partie d'une surface axialement intérieure (71a) d'au moins ladite première structure d'ancrage annulaire (51a), de manière à configurer, au moyen d'une première surface de positionnement (5a), une partie de surface axialement extérieure (7a) d'au moins ladite première structure d'ancrage annulaire (51a) de manière à être substantiellement complémentaire à une partie de surface de support (31a, 31b) pour le pneu cru (50) d'au moins l'une desdites plaques de paroi latérale inférieure (20) et supérieure (21) dudit moule (200) ;
- **caractérisé en outre en ce qu'**il comporte, entre ladite étape de construction et ladite étape de moulage et de vulcanisation, l'étape consistant à fournir de la chaleur audit pneu cru (50) en maintenant la température dudit pneu cru (50) en dessous d'une température de vulcanisation.

2. Processus selon la revendication 1, dans lequel ladite étape consistant à fournir de la chaleur audit pneu cru (50) a une durée comprise entre 5 et 60 minutes.

3. Processus selon l'une ou plusieurs des revendications précédentes, dans lequel ladite étape consistant à presser au moins une partie de surface axialement intérieure (71a) d'au moins ladite première structure d'ancrage annulaire (51a) comprend les étapes consistant à gonfler au moins une chambre gonflable (19a, 19b) afin de comprimer au moyen d'une paroi (11) de ladite au moins une chambre gonflable (19a, 19b) ladite au moins une partie de ladite surface axialement intérieure (71a) de ladite première structure d'ancrage annulaire (51a).

4. Processus selon la revendication 3, dans lequel ladite étape consistant à fournir de la chaleur audit pneu cru (50) comprend l'étape consistant à gonfler ladite au moins une chambre gonflable (19a, 19b) avec un fluide à une température comprise entre environ 60°C et environ 100°C.

5. Processus selon l'une ou plusieurs des revendications précédentes, dans lequel ladite étape consistant à presser au moins une partie d'une surface axialement intérieure (71a) d'au moins ladite première structure d'ancrage annulaire (51a) comprend les étapes consistant :
- à insérer ledit pneu cru (50) dans un corps central (3) de manière à amener ladite première structure d'ancrage annulaire à venir en butée (51a) contre une structure de positionnement (4) comportant ladite première surface de positionnement (5a) ;
- à gonfler ladite au moins une chambre gonflable (19a ; 19b) de manière à presser ladite partie d'une surface axialement intérieure (71a) de ladite première structure d'ancrage annulaire (51a) ;
- à amener ladite deuxième structure d'ancrage annulaire (51b) dudit pneu cru (50) opposée à ladite première surface de positionnement (5a) à venir en butée contre une deuxième surface de positionnement (5b).

6. Processus selon la revendication 5, dans lequel ladite étape consistant à amener ladite deuxième structure d'ancrage annulaire (51b) à venir en butée contre ladite deuxième surface de positionnement (5b) est suivie des étapes consistant :
- à presser une partie d'une surface axialement intérieure (71b) de ladite deuxième structure d'ancrage annulaire (51b) de manière à configurer, au moyen de ladite deuxième surface de positionnement (5b), une partie de surface axialement extérieure (7b) de ladite deuxième structure d'ancrage annulaire (51b) de manière à être substantiellement complémentaire à une partie de surface de support (31b) de l'autre plaque desdites plaques de paroi latérale inférieure (20) et supérieure (21) dudit moule (200).

7. Processus selon la revendication 1 ou 6, dans lequel la partie de surface axialement extérieure (7a) de ladite première structure d'ancrage annulaire (51a) est configurée de manière à être substantiellement complémentaire à la partie de surface de support (31a) de la plaque de paroi latérale inférieure (20) dudit moule (200).

8. Processus selon la revendication 7, dans lequel la partie de surface axialement extérieure (7b) de ladite deuxième structure d'ancrage annulaire (51b) est configurée de manière à être substantiellement complémentaire à la partie de surface de support (31b) de la plaque de paroi latérale supérieure (21) dudit moule (200).

9. Processus selon la revendication 5 lorsqu'elle dépend de la revendication 3, dans lequel ladite étape consistant à gonfler au moins une chambre gonflable (19a, 19b) comprend les étapes consistant
- à gonfler ladite au moins une chambre gonflable (19a, 19b) à une première pression de manière à ce qu'elle vienne en contact avec ladite partie de surface axialement intérieure (71a) de ladite première structure d'ancrage annulaire (51a) ;
- à gonfler, après avoir amené la deuxième structure d'ancrage annulaire (51b) à venir en butée contre la deuxième surface de positionnement (5b), en outre ladite au moins une chambre gonflable (19a, 19b) à une deuxième pression supérieure à ladite première pression.

10. Processus selon la revendication 6, dans lequel ladite étape consistant à presser la partie de surface axialement intérieure (71a) de ladite première structure d'ancrage annulaire (51a) comprend l'étape consistant :
- à gonfler une première chambre gonflable (19a) afin de comprimer au moyen d'une paroi (11) de ladite première chambre gonflable (19a) ladite partie de la surface axialement intérieure (71a) de la première structure d'ancrage annulaire (51a) ;
et ladite étape consistant à presser la partie de surface axialement intérieure (71b) de la deuxième structure d'ancrage annulaire (51b) comprend l'étape consistant :
- à gonfler une deuxième chambre gonflable (19b) afin de comprimer au moyen d'une paroi (11') de ladite deuxième chambre gonflable (19b) ladite partie de la surface axialement intérieure (71b) de la deuxième structure d'ancrage annulaire (51b).

11. Processus selon l'une quelconque des revendications précédentes, dans lequel entre ladite étape de construction et ladite étape de moulage et de vulcanisation, une étape consistant à transférer le pneu cru (50) d'une installation de construction à une station de moulage et de vulcanisation (110) au moyen d'un préhenseur robotisé est en outre prévue.

12. Station de moulage et de vulcanisation (110) destinée à la fabrication de pneus, chaque pneu cru (50) comprenant une structure de carcasse (52) ayant au moins un pli de carcasse associé de manière fonctionnelle à une première structure d'ancrage annulaire (51a) et à une deuxième structure d'ancrage annulaire (51b), une bande de roulement (53) dans une position radialement extérieure par rapport à ladite structure de carcasse, et une structure de ceinture interposée entre ladite structure de carcasse et ladite bande de roulement, ladite station de moulage et de vulcanisation (110) comprenant :
- au moins un moule de vulcanisation (200), ledit moule (200) comportant une plaque de paroi latérale supérieure (21) et une plaque de paroi latérale inférieure (20) et un anneau de secteurs circonférentiels (55) entourant une cavité de moulage (17) ;
- au moins un appareil (100) associé de manière fonctionnelle audit au moins un moule (200) comprenant :
• au moins une structure de support (1) pour supporter un pneu cru (50) ;
• au moins une première surface de positionnement (5a, 5b) associée de manière fonctionnelle à ladite structure de support (1) adaptée pour venir en contact avec au moins une partie d'une surface axialement extérieure (7a, 7b) d'au moins l'une desdites première (51a) et deuxième (51b) structures d'ancrage annulaires ;
• au moins un dispositif destiné à presser une partie d'une surface axialement intérieure (71a, 71b) d'au moins l'une desdites première (51a) et deuxième (51b) structures d'ancrage annulaires, ledit dispositif étant adapté pour venir en contact avec ladite partie de surface axialement intérieure (71a, 71b), de sorte à configurer ladite partie de surface axialement extérieure (7a, 7b) d'au moins l'une desdites première (51a) et deuxième (51b) structures d'ancrage annulaires de manière à être substantiellement complémentaire à ladite première surface de positionnement (5a, 5b) ;
• au moins un dispositif destiné à fournir de la chaleur audit pneu cru (50) apte à maintenir la température dudit pneu cru (50) en dessous d'une température de vulcanisation ;
- dans lequel ladite au moins une première surface de positionnement (5a, 5b) a une configuration substantiellement analogue à une partie de surface de support pour le pneu cru (50) d'au moins l'une parmi ladite plaque de paroi latérale inférieure (20) et ladite plaque de paroi latérale supérieure (21) .

13. Station de moulage et de vulcanisation (110) selon la revendication 12, dans laquelle ledit dispositif destiné à presser ladite partie de surface axialement intérieure (71a, 71b) d'au moins l'une desdites première (51a) et deuxième (51b) structures d'ancrage annulaires contre ladite surface de positionnement (5a, 5b) comprend au moins une chambre gonflable (19a, 19b).

14. Station de moulage et de vulcanisation (110) selon la revendication 13, comportant au moins une conduite (25) destinée à laisser passer un fluide à une pression relative comprise entre environ 0,1 bar et environ 2 bars dans ladite chambre gonflable (19a, 19b).

15. Station de moulage et de vulcanisation (110) selon la revendication 13, comportant au moins une conduite (25) destinée à laisser passer un fluide à une température comprise entre environ 60°C et environ 100°C dans ladite au moins une chambre gonflable (19a, 19b).

16. Station de moulage et de vulcanisation (110) selon l'une ou plusieurs des revendications 12 à 15, dans laquelle ladite première surface de positionnement (5a) est adaptée pour venir en contact avec au moins une partie d'une surface axialement extérieure (7a) de la première structure d'ancrage annulaire (51a), ladite structure de support (1) étant associée de manière fonctionnelle à une deuxième surface de positionnement (5b), ladite deuxième surface de positionnement (5b) étant adaptée pour venir en contact avec au moins une partie d'une surface axialement extérieure (7b) de la deuxième structure d'ancrage annulaire (51b).

17. Station de moulage et de vulcanisation (110) selon la revendication 16, comprenant une première chambre gonflable (19a) destinée à configurer la partie de ladite surface axialement extérieure (7a) de la première structure d'ancrage annulaire (51a) contre la première surface de positionnement (5a), et une deuxième chambre gonflable (19b) destinée à configurer la partie de ladite surface axialement extérieure (7b) de la deuxième structure d'ancrage annulaire (51b) contre ladite deuxième surface de positionnement (5b).

18. Station de moulage et de vulcanisation (110) selon l'une ou plusieurs des revendications 12 à 17, comprenant un élément de fermeture (6) mobile par rapport à ladite structure de support (1).

19. Station de moulage et de vulcanisation (110) selon l'une ou plusieurs des revendications 12 à 18, comportant un corps central (3) qui fait saillie à partir d'une base (2) de ladite structure de support (1) et sur lequel ledit pneu cru (50) est monté.

20. Station de moulage et de vulcanisation (110) selon la revendication 18, dans laquelle ledit élément de fermeture (6) comprend un deuxième élément annulaire supérieur mobile comportant ladite deuxième surface de positionnement (5b) sur laquelle est configurée la partie de surface axialement extérieure (7b) de la deuxième structure d'ancrage annulaire (51b).

21. Station de moulage et de vulcanisation (110) selon la revendication 19, dans laquelle ledit corps central (3) est extensible de manière télescopique.

22. Station de moulage et de vulcanisation (110) selon l'une ou plusieurs des revendications 12 à 21, dans laquelle au moins l'une desdites surfaces de positionnement (5a ; 5b) est amovible.

23. Station de moulage et de vulcanisation (110) selon l'une ou plusieurs des revendications 12 à 22, comportant une enceinte (60) contenant ladite structure de support (1).

24. Station de moulage et de vulcanisation (110) selon la revendication 23, dans laquelle ladite enceinte (60) est une chambre commandée par thermostat.
